# EUROPÄISCHE PATENTSCHRIFT

(11) **EP 1 896 285 B1**
(45) Veröffentlichungstag und Bekanntmachung des Hinweises auf die Patenterteilung: **09.02.2011**
(21) Anmeldenummer: 06760771.3
(22) Anmeldetag: 10.05.2006
(51) Int. Cl.: B60K 31/00, B60K 35/00

(54) **Vorrichtung zum unterstützen eines Führens eines Fahrzeugs und Verfahren zum betreiben der Vorrichtung**
Device for assisted driving of a vehicle and method for operating such a device
Dispositif pour assister la conduite d'un véhicule, et procédé pour faire fonctionner le dispositif

(30) Priorität: 24.06.2005 DE 102005029444
(43) Veröffentlichungstag der Anmeldung: 12.03.2008
(73) Patentinhaber: ROBERT BOSCH GMBH, 70442 Stuttgart (DE)
(72) Erfinder: KNOLL, Peter, 76275 Ettlingen (DE); GRABSCH, Hans-Peter, 71034 Boeblingen (DE); BEUTNAGEL-BUCHNER, Uwe, 70186 Stuttgart (DE); UHLER, Werner, 76646 Bruchsal (DE); ENGELN, Arnd, 72072 Tuebingen (DE); EGELHAAF, Jan, 71229 Leonberg (DE); ARNON, Marc, 71229 Leonberg (DE); ROSSMEIER, Markus, 56170 Benndorf (DE); DORNA, Michael, 74321 Bietigheim-Bissingen (DE); ENDERS, Sebastian, 70188 Stuttgart (DE)
(86) Internationale Anmeldenummer: PCT/EP2006/062184
(87) Internationale Veröffentlichungsnummer: WO 2006/136476

(56) Entgegenhaltungen:
- EP-A1- 1 223 567
- EP-A1- 1 602 561
- EP-A2- 1 561 631
- WO-A-03/096068
- WO-A-2005/025918
- WO-A1-01/89897
- US-A- 5 764 139
- US-A1- 2001 012 976
- US-A1- 2002 133 285
- US-A1- 2002 186 228
- US-A1- 2003 167 112
- US-A1- 2004 178 894
- US-A1- 2005 125 121

## Beschreibung

### Stand der Technik

Die Erfindung betrifft eine Vorrichtung zum Unterstützen eines Führens eines Fahrzeugs mit mindestens zwei Fahrerassistenzsystemen und mit einem Ausgabemittel zum Übermitteln von Informationen zumindest eines der Fahrerassistenzsysteme an einen Fahrer des Fahrzeugs. Außerdem betrifft die Erfindung ein Verfahren zum Betreiben einer solchen Vorrichtung.

Fahrerassistenzsysteme (FAS) sind allgemein bekannt und werden insbesondere in Kraftfahrzeugen zunehmend zur Unterstützung des Fahrers eingesetzt. Dabei können zum einen Fahrerassistenzsysteme, die Teilaufgaben des Fahrers übernehmen und ihn gegebenenfalls zum Beispiel über Fahrzustände informieren, vorgesehen sein und zum anderen solche Fahrerassistenzsysteme, die den Fahrer beispielsweise beim Erkennen eines möglichen Fehlverhaltens des Fahrers lediglich informieren.

Die verschiedenen Fahrerassistenzsysteme sind unabhängig voneinander in das Fahrzeug eingebaut und arbeiten üblicherweise mit eigenen Sensoren und Steuergeräten. Jedes der Fahrerassistenzsysteme verwendet ein eigenes Ausgabegerät zur Übermittlung von Hinweisen an den Fahrer. Bereits bei einem parallelen Einsatz von nur zwei

Fahrerassistenzsystemen in dem Fahrzeug kann eine Ausgabe von Hinweisen der unterschiedlichen Fahrerassistenzsysteme in möglicherweise zudem zeitlich gedrängtem Ablauf zu einer jedenfalls temporär erhöhten Belastung des Fahrers führen. Aus der US 5764139A ist eine Vorrichtung zum Unterstützen eines Führens eines Fahrzeugs gemäβ dem Oberbegriff des Anspruchs 1 bekannt.

Aus der US 2001/0012976 A1 ist ein Anzeigesystem für ein Fahrzeug bekannt. In der

Anzeige können nach Wahl durch einen Benutzer Informationen verschiedener Fahrerinformationssysteme ausgegeben werden. So ist es beispielsweise möglich, Informationen eines abstandsgeregelten Folgefahrens in der Anzeige darzustellen.

Aus der US 2003/0167112 A1 ist eine Bedieneinrichtung für verschiedene Fahrzeugsysteme bekannt.

Aus der nachveröffentlichten EP 156 1631 A2 ist ein Abstandshalte-System für ein Kraftfahrzeug bekannt, bei dem in einer Anzeige durch einen entsprechenden Symbolbetrieb sowohl ein Setzen einer Geschwindigkeit, ein Erfassen eines Fahrzeugs und eine Übernahmeaufforderung dargestellt werden kann. Durch zusätzliche Symbole kann zudem der Betriebsstatus eines Spurhalte-Systems dargestellt werden.

Der Erfindung liegt die Aufgabe zugrunde, eine Vorrichtung zu liefern, die bei uneingeschränkter Unterstützung des Fahrers durch die Fahrerassistenzsysteme den Fahrer beim Führen des Fahrzeugs weiter entlastet. Darüber hinaus liegt der Erfindung die Aufgabe zugrunde, ein Verfahren zum Betreiben einer derartigen Vorrichtung anzugeben.

Diese Anfgabe wird mit einer Vorrichtung zum Unterstützen eines Führens eines Fahrzeugs gemäβ Anspruch 1 sowie mit einem entsprechenden Verfahren gemäβ Anspruch 9 gelöst.

### Vorteile der Erfindung

Die Erfindung sieht mithin einen Informationskoordinator vor, der Informationen von an sich unabhängig voneinander arbeitenden Fahrerassistenzsystemen in einem Fahrzeug, und zwar insbesondere in einem Kraftfahrzeug, koordiniert, so dass eine untereinander abgestimmte Übermittlung der verschiedenen Informationen an den Fahrer erfolgt. Die Informationen können allgemein beispielsweise Mitteilungen, Nachrichten, Messwerte oder Daten sein, wobei die Informationen in Form von Signalen, das heißt in einer physikalischen Darstellung, in der erfindungsgemäßen Vorrichtung übertragen werden; eine Information wird vorzugsweise von zumindest einem Signal gebildet. Von besonderem Vorteil ist die Erfindung, wenn es sich bei den Informationen um dem Fahrer mitzuteilende Warnungen, auf die er regelmäßig reagieren muss, handelt. Mit der Erfindung kann vorteilhaft eine Übermittlung und Ausgabe von zahlreichen Informationen, insbesondere Warnungen, in nur sehr kurzer Zeit an den Fahrer, was eine hohe Belastung für diesen bedeuten würde, vermieden werden. Dabei wird mittels des Informationskoordinators - entgegen einem einfachen Unterdrücken von Informationen, was grundsätzlich auch vorstellbar wäre - zuverlässig ein Informationsverlust vermieden. Demgemäß kann dem Fahrer zu jedem Zeitpunkt die volle Unterstützung der in seinem Fahrzeug vorhandenen Fahrerassistenzsysteme zuteil werden. Mittels des Informationskoordinators wird die Anzahl der Einzelereignisse von Informationsausgaben an den Fahrer reduziert. Das kann zum Beispiel in der Form erfolgen, dass verallgemeinerte Hinweise, die jeweilige Informationen einzelner Fahrerassistenzsysteme zu einer Meldung zusammenfassen, an den Fahrer ausgegeben werden können; der Informationsgehalt einzelner Informationsausgaben steigt in einem solchen Fall. Der Fahrer kann dadurch in Ruhe und umfänglich auf die Meldungen reagieren und gegebenenfalls erforderliche korrigierende Maßnahmen zum Führen des Fahrzeugs einleiten. Weitere Beispiele für eine mit der Erfindung mögliche Reduzierung der Anzahl der Einzelereignisse von Informationsausgaben an den Fahrer können ein Priorisieren von Informationen, ein Unterdrücken von (beispielsweise für die Fahrsicherheit unwesentlichen) Informationen, ein Verzögern von Informationen oder ein Auflösen von (scheinbar oder tatsächlich) widersprüchlichen Informationen sein. Die erfindungsgemäße Vorrichtung ermöglicht eine zusätzlich erhöhte Konzentration des Fahrers auf das Verkehrsgeschehen, wodurch nicht nur eine Erhöhung der Fahrsicherheit des eigenen Fahrzeugs, sondern der Verkehrssicherheit insgesamt erreicht werden kann. Besonders gut eignet sich die Erfindung, die eine Koordination insbesondere von aktuellen Warnungen und voraussehbaren Warnungen ermöglicht, gleichermaßen für Personenkraftwagen wie für Nutzkraftwagen. Für den Fahrer überflüssige, aber seine Aufmerksamkeit beanspruchende Warnungen können mit der Erfindung zuverlässig vermieden werden. Die Fahrerassistenzsysteme weisen vorteilhaft keine eigene Schnittstelle zum Fahrer auf, sondern Informationen der Fahrerassistenzsysteme werden ausschließlich über den Informationskoordinator an den Fahrer übermittelt. Die dem Fahrer zu übermittelnden Informationen sind allgemein Betriebsparameter der Vorrichtung; Eingangsparameter des Informationskoordinators sind insbesondere diejenigen Ausgangsparameter der Fahrerassistenzsysteme, die für das Auslösen einer Warnung von Bedeutung sind. Mit Hilfe des erfindungsgemäßen Informationskoordinators lassen sich vorteilhaft Gefahrensituationen abwenden und Widersprüche in der Informationsübermittlung an den Fahrer auflösen. Bezüglich des erfindungsgemäßen Verfahrens könnte man sich vorstellen, dass nicht eine zu erwartende Information vorhergesagt wird, sondern dass beispielsweise innerhalb eines Zeitfensters in dem Informationskoordinator eingehende Informationen der Fahrerassistenzsysteme zusammengefasst und an den Fahrer weitergeleitet werden. Jedoch ist die erfindungsgemäß vorgeschlagene Informationsvereinigung unter Berücksichtigung einer Vorhersage insbesondere bei Informationen in Form von Warnungen demgegenüber sehr vorteilhaft, weil damit vor allem ein - möglicherweise sicherheitsrelevantes - verzögertes Weiterleiten von Warnungen an den Fahrer vermieden wird. In gleicher Weise wie auf zu erwartende Informationen der Fahrerassistenzsysteme können sich die Vorhersagen des Vorhersagemittels gegebenenfalls auch auf Informationen eines Fahrerinformationssystems und/oder eines Fahrzeugsensors beziehen. In einer nicht zur Erfindung gehörenden Ausführungsform wäre es zwar vorstellbar, dass Wahrscheinlichkeiten, ab welchen Informationen für die Informationsvereinigung berücksichtigt werden, in der erfindungsgemäßen Vorrichtung zum Beispiel in einem Speicher außerhalb des Informationskoordinators abgelegt sind. Vorteilhaft ist jedoch die erfindungsgemäße Ausbildung-des Verfahrens, wonach die jeweilige Wahrscheinlichkeit dem Informationskoordinator von dem betreffenden Fahrerassistenzsystem übermittelt wird, das heißt dieses Fahrerassistenzsystem selbst gibt eine Information zusammen mit einer bestimmten Wahrscheinlichkeit bezüglich eines zu erwartenden tatsächlichen Eintreffens eines mit der Information korrespondierenden Ereignisses an; letzteres bedeutet, dass das Verfahren auch Wahrscheinlichkeitswerte beachten kann, die zusammen mit einer Information an das Steuermittel übertragen werden. Vorteilhaft kann vorgesehen sein, dass vor Ausgabe der Gesamtinformation an den Fahrer eine Vorabinformation, insbesondere eine Vorwarnung, an den Fahrer übermittelt wird.

Erfindungsgemäβ ist es vorgesehen, dass das Steuerungsmittel eine von einem ersten der Fahrerassistenzsysteme eingehende erste Information und eine von einem zweiten der Fahrerassistenzsysteme eingehende zweite Information zu einer Gesamtinformation kombiniert und die Gesamtinformation an das Ausgabemittel weiterleitet. Dementsprechend ist das Steuerungsmittel geeignet, eine in dem Steuerungsmittel eingegangene erste Information und eine in dem Steuerungsmittel eingegangene zweite Information zu einer neuen, eine Gesamtinformation bildenden Information zu kombinieren und diese Gesamtinformation, die sich aus den beiden einzelnen Informationen ergibt, an das Ausgabemittel weiterzuleiten. Es kann dabei sowohl vorgesehen sein, dass für die Gesamtinformation gleichzeitig in dem Steuerungsmittel eingehende Informationen berücksichtigt werden als auch dass für die Gesamtinformation innerhalb eines bestimmten, gegebenenfalls einstellbaren Zeitfensters in dem Steuerungsmittel eingehende Informationen berücksichtigt werden.

Von besonderem Vorteil ist es, wenn das Steuerungsmittel eingangsseitig mit zumindest einem Fahrerinformationssystem und/oder unmittelbar mit zumindest einem Fahrzeugsensor verbunden ist. Damit kann der Fahrer dadurch zusätzlich entlastet werden, dass nicht nur an ihn zu übermittelnde Informationen von Fahrerassistenzsystemen, sondern auch solche von Fahrerinformationssystemen (FIS) und/oder von direkt mit dem Fahrer kommunizierenden Sensoren, bei denen es sich auch um eine mehrere Sensoren umfassende Sensoreinrichtung handeln kann, mittels des Informationskoordinators untereinander abgestimmt und dem Fahrer weitergeleitet werden. Beispiele für Fahrerinformationssysteme sind Navigationsgeräte, Regensensoren und Lichtsensoren; der Begriff Fahrerinformationssysteme ist dabei allgemein zu verstehen und kann vorzugsweise auch Unterhaltungs- und/oder Informations- und/oder Kommunikationsmittel, wie zum Beispiel ein Entertainmentsystem oder ein Radio mit Staumelder (bekannt unter der Bezeichnung Traffic Message Channel (TMC)) oder ein Telefon, umfassen. Beispiele für Fahrzeugsensoren sind solche, die eine Gaspedalstellung, eine Bremspedalstellung oder einen Lenkwinkel messen.

Weist das Steuerungsmittel vorteilhaft ein Entscheidungsmittel zur Angabe von an das Ausgabemittel weiterzuleitenden Informationen zumindest der Fahrerassistenzsysteme auf, so kann in besonders einfacher Weise zum Beispiel auf in dem Steuerungsmittel, insbesondere in dem Entscheidungsmittel, abgelegte Daten über mögliche Fahrzustände und/oder über einen aktuellen Fahrtverlauf mit Hilfe des Entscheidungsmittels zurückgegriffen und auf dieser Grundlage eine Koordination der Informationen mit dem Ergebnis einer Angabe der jeweils von dem Steuerungsmittel an das Ausgabemittel weiterzuleitenden Information vorgenommen werden.

Vorteilhaft weist das Steuerungsmittel ein Vorhersagemittel zur Angabe von zu erwartenden Informationen zumindest der Fahrerassistenzsysteme auf, so dass der Informationskoordinator auch noch nicht eingetroffene, aber mit einer hohen Wahrscheinlichkeit zu erwartende Informationen zur Informationsabstimmung und Weiterleitung an den Fahrer berücksichtigen kann. Auf diese Weise kann eine noch gezieltere Informationsübermittlung an den Fahrer erfolgen. Mittels einer Vorhersage insbesondere von Warnungen ist es möglich, Sicherheitssysteme schon vor einem Eintritt eines eigentlichen Warnereignisses vorzubereiten und dadurch eine systembedingte Reaktionszeit zu verkürzen, wodurch die Fahrsicherheit insgesamt erhöht wird.

Weiterhin ist es von besonderem Vorteil, wenn das Steuerungsmittel einen Speicher mit zu erwartenden Fahrsituationen, die zum Beispiel auf in den Speicher grundsätzlich bereits eingegebenen Daten und/oder auf Daten früherer Fahrtverläufe beruhen, aufweist und der Speicher dem Vorhersagemittel vorgeschaltet ist. Auf der Basis typischer Fahrsituationen und Einordnung des tatsächlichen Fahrtverlaufes in eine dieser Fahrsituationen kann die Vorhersagegenauigkeit des Vorhersagemittels weiter erhöht werden.

Für eine deutliche Ausgabe der Informationen an den Fahrer ist es vorteilhaft, wenn das Ausgabemittel mindestens ein optisches Ausgabeelement, insbesondere einen Bildschirm, und/oder mindestens ein akustisches Ausgabeelement, insbesondere einen Lautsprecher, und/oder mindestens ein haptisches Ausgabeelement, das heißt ein den Tastsinn des Fahrers ansprechendes Gerät wie zum Beispiel eine Vibrationseinrichtung, aufweist.

Dabei weist das Ausgabemittel vorzugsweise zumindest zwei Ausgabeelemente auf, deren Ausgaben jeweils mit einem unterschiedlichen menschlichen Sinn wahrnehmbar sind. Das bedeutet, dass beispielsweise sowohl ein optisches Ausgabeelement als auch ein haptisches Ausgabeelement vorhanden ist. Beide Ausgabeelemente können sowohl gemeinsam als auch selektiv, abhängig vom Einzelfall zur Informationsausgabe an den Fahrer verwendet werden.

Vorteilhaft ist es, wenn zwischen dem Steuerungsmittel und dem Ausgabemittel ein Ausgabekoordinator zur Steuerung von durch das Steuerungsmittel an das Ausgabemittel weitergeleiteten Informationen angeordnet ist. Der Ausgabekoordinator kann die von dem Informationskoordinator an den Fahrer weitergeleiteten Informationen an die Erfordernisse des Fahrers anpassen und zum Beispiel ein jeweils geeignetes Ausgabeelement unter mehreren auswählen und zur Informationsausgabe an den Fahrer einsetzen.

Die Bauelementeintegration in der erfindungsgemäßen Vorrichtung wird vorteilhaft erhöht, wenn das Ausgabemittel den Ausgabeelementen vorgeschaltet einen Ausgabekoordinator zur Steuerung von durch das Steuerungsmittel an das Ausgabemittel weitergeleiteten Informationen aufweist.

Die erfindungsgemäße Vorrichtung ist dann besonders wirkungsvoll einsetzbar, wenn die Fahrerassistenzsysteme ein Adaptive-Fahrgeschwindigkeitsregelung-Fahrerassistenzsystem, das heißt ein Adaptive-Cruise-Control(ACC)-Fahrerassistenzsystem, und/oder ein Spurverlassenswarnung-Fahrerassistenzsystem, das heißt ein Lane-Departure-Warning(LDW)-Fahrerassistenzsystem, und/oder ein Spurwechselhilfe-Fahrerassistenzsystem, das heißt ein Lane-Change-Assist(LCA)-Fahrerassistenzsystem, umfassen.

Besonders vorteilhaft für das erfindungsgemäße Verfahren ist es, wenn das Steuerungsmittel in dem Steuerungsmittel eingehenden Informationen der Fahrerassistenzsysteme eine Fahrsituation aus einer Mehrzahl von zu erwartenden, in dem Speicher abgelegten Fahrsituationen zuordnet und die zugeordnete Fahrsituation für die Informationsvereinigung berücksichtigt wird. Auf diese Weise kann der Informationskoordinator besonders schnell und zuverlässig arbeiten.

### Zeichnung

Ausführungsbeispiele der Erfindung sind in der Zeichnung schematisiert dargestellt und werden nachfolgend näher beschrieben. Es zeigen
- Figur 1: eine erfindungsgemäβ Vorrichtung zum Unterstützen eines Führens ei- nes Fahrzeugs und
- Figur 2: eine nicht zur Erfindung gehöronde Vorrichtung zum Unterstützen eines Führens eines Fahrzeugs.

### Beschreibung der Ausführungsbeispiele

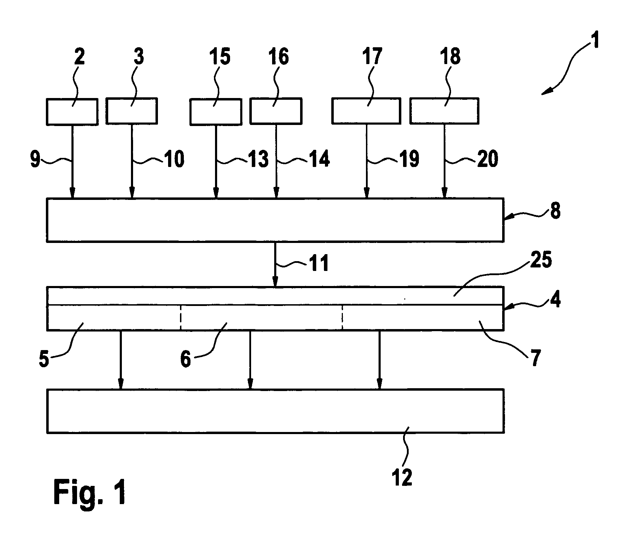

Figur 1 zeigt in einem vereinfachten Schaubild eine Vorrichtung 1 zum Unterstützen eines Führens eines Kraftfahrzeugs. Die Vorrichtung 1 ist in das hier nicht weiter dargestellte Kraftfahrzeug eingebaut und weist zwei Fahrerassistenzsysteme 2, 3 auf. Außerdem ist ein Ausgabemittel 4 vorgesehen, mit dessen Hilfe Informationen, und zwar insbesondere Warnungen, an einen Fahrer 12 des Kraftfahrzeugs übermittelt werden. Das Ausgabemittel 4 weist ein optisches Ausgabeelement 5 mit einem Bildschirm, ein akustisches Ausgabeelement 6 mit einem Lautsprecher und ein haptisches Ausgabeelement 7 mit einer zum Beispiel an einem Lenkradkranz eines Lenkrads des Kraftfahrzeugs angeordneten Vibrationseinrichtung auf, so dass mit an den Fahrer zu übermittelnde Informationen darstellenden Ausgaben des Ausgabemittels 4 drei unterschiedliche Sinne des Fahrers, nämlich Gesichts-, Gehör- und Tastsinn, ansprechbar sind.

Zwischen Ausgabemittel 4 und Fahrerassistenzsystemen 2, 3 ist ein als Informationskoordinator ausgebildetes Steuerungsmittel 8 angeordnet, das eingangsseitig über Datenleitungen 9, 10 mit den Fahrerassistenzsystemen 2, 3 und ausgangsseitig über eine Datenleitung 11 mit dem Ausgabemittel 4 verbunden ist. Über jeweils eine weitere Datenleitung 13, 14 zur Übertragung von Informationen sind zusätzlich zwei Fahrerinformationssysteme 15, 16 mit dem Steuerungsmittel 8 verbunden. Außerdem sind beispielhaft zwei Sensoren 17, 18 über jeweils eine zur Informationsübertragung vorgesehene Datenleitung 19, 20 mit einem Eingang des Steuerungsmittels 8 verbunden. Bei den genannten Datenleitungen 9, 10, 11, 13, 14, 19, 20 kann es sich allgemein zum Beispiel auch um Funkstrecken oder um Kanäle in einem Bussystem handeln.

Das Ausgabemittel 4 weist, den Ausgabeelementen 5, 6, 7 vorgeschaltet, einen Ausgabekoordinator 25 zur Steuerung von durch das Steuerungsmittel 8 an das Ausgabemittel 4 weitergeleiteten Informationen auf; mittels des Ausgabekoordinators 25 werden die vorgenannten Informationen einem einzelnen der Ausgabeelemente 5, 6, 7 oder einer Gruppe von Ausgabeelementen zugewiesen.

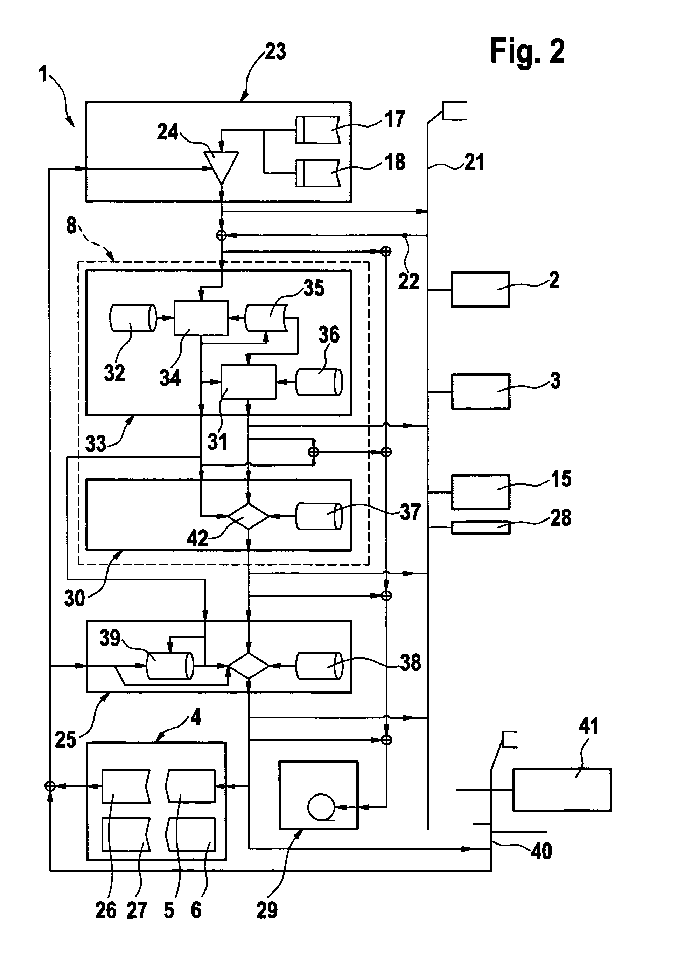

Eine andere, nicht zur Erfindung gehöronde Vorrichtung 1 zum Unterstützen eines Führens eines Kraftfahrzeugs ist in Figur 2 in einem vereinfachten Schaubild dargestellt, wobei für sich jeweils entsprechende Elemente die gleichen Bezugszeichen verwendet sind wie in dem Ausführungsbeispiel nach Figur 1.

Die Vorrichtung 1 weist drei Fahrerassistenzsysteme 2, 3, 28, und zwar ein erstes als ACC-Fahrerassistenzsystem ausgebildetes Fahrerassistenzsystem 2, ein zweites als LDW-Fahrerassistenzsystem ausgebildetes Fahrerassistenzsystem 3 sowie ein drittes als LCA-Fahrerassistenzsystem ausgebildetes Fahrerassistenzsystem 28, und ein Fahrerinformationssystem 15 auf, die an eine gemeinsame Busdatenleitung 21 eines Datenbusses angeschlossen sind. Über eine Datenleitung 22 ist die Busdatenleitung 21 mit einem Eingang eines als Informationskoordinator ausgebildeten Steuerungsmittels 8 verbunden. Das Steuerungsmittel 8 ist eingangsseitig zudem unmittelbar mit einer Sensoreinrichtung 23 verbunden, die zwei Fahrzeugsensoren 17, 18 aufweist, deren Informationen nach einer Sensordatenfusion in einem Mischelement 24 der Sensoreinrichtung 23 an das Steuerungsmittel 8 weitergeleitet werden.

Ausgangsseitig ist das Steuerungsmittel 8 mit einem allgemein als Mensch-Maschine-Schnittstelle (MMS) ausgebildeten Ausgabemittel 4 verbunden, wobei das Ausgabemittel 4 in diesem Ausführungsbeispiel neben Ausgabeelementen 5, 6 auch Eingabeelemente 26, 27 aufweist. Zwischen dem Steuerungsmittel 8 und dem Ausgabemittel 4 ist ein als MMS-Manager ausgebildeter Ausgabekoordinator 25 zur Steuerung von durch das Steuerungsmittel 8 an das Ausgabemittel 4 weitergeleiteten Informationen angeordnet.

Ferner ist das Steuerungsmittel 8 ausgangsseitig mit einer Registriereinrichtung 29 verbunden. Das Steuerungsmittel 8 weist ein Entscheidungsmittel 30 zur Angabe von an das Ausgabemittel 4 weiterzuleitenden Informationen, insbesondere Warnungen, der Fahrerassistenzsysteme 2, 3, 28, des Fahrerinformationssystems 15 und der Fahrzeugsensoren 17, 18 auf. Außerdem weist das Steuerungsmittel 8 ein Vorhersagemittel 31 zur Angabe von zu erwartenden Informationen der Fahrerassistenzsysteme 2, 3, 28, des Fahrerinformationssystems 15 und der Fahrzeugsensoren 17, 18 auf. Dem Vorhersagemittel 31 vorgeschaltet ist ein Speicher 32 des Steuerungsmittels 8, in welchem Speicher 32 zu erwartende Fahrsituationen des Kraftfahrzeuges abgespeichert sind.

Das Vorhersagemittel 31 ist Bestandteil eines Fahrsituationsdeutungsmittels 33 des Steuerungsmittels 8, wobei das Fahrsituationsdeutungsmittel 33 auch einen Fahrsituationsverarbeiter 34, einen Historiendatenspeicher 35, in dem ein bisheriger Verlauf einer aktuellen Fahrt des Kraftfahrzeugs abgespeichert ist, und einen Regeldatenspeicher 36 umfasst. Auch das Entscheidungsmittel 30 und der Ausgabekoordinator 25, der zudem einen Benutzerprofilspeicher 39 aufweist, sind mit jeweils einem Regeldatenspeicher 37, 38 versehen. Die Regeldatenspeicher 36, 37, 38 enthalten vorzugsweise Regeln der künstlichen Intelligenz.

Verknüpft ist die Vorrichtung 1 zum Unterstützen eines Führens des Kraftfahrzeugs mit einer Busdatenleitung 40 eines einem Unterhaltungssystem 41 zugehörigen Datenbusses.

Bei Eingang einer an den Fahrer zu übermittelnden Information eines der Fahrerassistenzsysteme 2, 3, 28, des Fahrerinformationssystems 15 oder der Fahrzeugsensoren 17, 18 in dem Steuerungsmittel 8 und bei gleichzeitiger Angabe einer mit einer vorgegebenen Wahrscheinlichkeit zu erwartenden Information eines anderen Gerätes der vorgenannten Fahrerassistenzsysteme 2, 3, 28, des Fahrerinformationssystems 15 oder der Fahrzeugsensoren 17, 18 durch das Vorhersagemittel 31 des Steuerungsmittels 8 wird mit einem Vereinigungselement 42 des Entscheidungsmittels 30 des Steuerungsmittels 8 eine Informationsvereinigung zu einer Gesamtinformation vorgenommen. Vorzugsweise kann das Vorhersagemittel 31 kontinuierlich zu erwartende Informationen angeben, wobei deren weitere Berücksichtigung von der Wahrscheinlichkeit ihres Eintreffens abhängen kann.

Die aus dem Vereinigungselement 42 ausgehende Gesamtinformation wird an das Ausgabemittel 4 weitergeleitet. Für die Informationsvereinigung wird eine zugeordnete Fahrsituation berücksichtigt, welche sich daraus ergibt, dass das Steuerungsmittel 8 mit Hilfe des Situationsdeutungsmittels 33 in dem Steuerungsmittel 8 eingehenden Informationen der Fahrerassistenzsysteme 2, 3, 28, des Fahrerinformationssystems 15 oder der Fahrzeugsensoren 17, 18 eine Fahrsituation aus einer Mehrzahl von zu erwartenden, in dem Speicher 32 abgelegten Fahrsituationen zuordnet.

Das Situationsdeutungsmittel 33 gibt mit einer vorgegebenen Wahrscheinlichkeit das tatsächliche Vorliegen einer bestimmten Fahrsituation an, und es macht, mit Hilfe des Vorhersagemittels 31, eine Vorhersage bezüglich eines mit einer vorgegebenen Wahrscheinlichkeit zu erwartenden Eintretens einer bestimmten Fahrsituation. Diese Angabe und Vorhersage wird von dem Entscheidungsmittel 30 berücksichtigt.

## Patentansprüche

1. Vorrichtung zum Unterstützen eines Führens eines Fahrzeugs mit mindestens zwei Fahrerassistenzsystemen und mit einem Ausgabemittel zum Übermitteln von Informationen zumindest eines der Fahrerassistenzsysteme an einen Fahrer des Fahrzeugs, wobei ein eingangsseitig mit den Fahrerassistenzsystemen (2, 3) und ausgangsseitig mit dem Ausgabemittel (4) verbundenes, als Informationskoordinator ausgebildetes Steuerungsmittel (8) zur Steuerung von dem Fahrer (12) zu übermittelnden Informationen der Fahrerassistenzsysteme (2, 3) vorgesehen ist, **dadurch gekennzeichnet, dass** die Fahrerassistenzsyssteme (2, 3) jeweils zu einer Angabe einer Wahrscheinlichkeit bezüglich eines zu erwartenden Eintreffens eines mit der jeweiligen übermittelten Information korrespondierenden Ereignisses an das Steuermittel (8) ausgelegt sind und dass das Steuerungsmittel (8), bei Eingang einer an den Fahrer zu übermittelnden Information eines der Fahrerassistenzsysteme bei einer gleichzeitigen Angabe einer mit einer bestimmten Wahrscheinlichkeit zu erwartenden Information eines anderen der Fahrerassistenzsysteme (2, 3, 28) durch dieses andere Fahrerassistenzsystem selbst, eine von dem ersten der Fahrerassistenzsysteme (2, 3) eingehende erste Information und eine von dem zweiten der Fahrerassistenzsysteme (2, 3) eingehende zweite Information zu einer Gesamtinformation kombiniert und die Gesamtinformation an das Ausgabemittel (4) weiterleitet.

2. Vorrichtung nach Anspruch 1, **dadurch gekennzeichnet, dass** das Steuerungsmittel (8) eingangsseitig mit zumindest einem Fahrerinformationssystem (15) und/oder unmittelbar mit zumindest einem Fahrzeugsensor (17) verbunden ist.

3. Vorrichtung nach einem der vorhergehenden Ansprüche, **dadurch gekennzeichnet, dass** das Steuerungsmittel (8) ein Entscheidungsmittel (30) zur Angabe von an das Ausgabemittel (4) weiterzuleitenden Informationen zumindest der Fahrerassistenzsysteme (2, 3) aufweist.

4. Vorrichtung nach einem der vorhergehenden Ansprüche, **dadurch gekennzeichnet, dass** das Ausgabemittel (4) mindestens ein optisches Ausgabeelement (5) und/oder mindestens ein akustisches Ausgabeelement (6) und/oder mindestens ein haptisches Ausgabeelement (7) aufweist.

5. Vorrichtung nach Anspruch 4, **dadurch gekennzeichnet, dass** das Ausgabemittel (4) zumindest zwei Ausgabeelemente (5, 6, 7) aufweist, deren Ausgaben jeweils mit einem unterschiedlichen menschlichen Sinn wahrnehmbar sind.

6. Vorrichtung nach Anspruch 4 oder 5, **dadurch gekennzeichnet, dass** zwischen dem Steuerungsmittel (8) und dem Ausgabemittel (4) ein Ausgabekoordinator (25) zur Steuerung von durch das Steuerungsmittel (8) an das Ausgabemittel (4) weitergeleiteten Informationen angeordnet ist.

7. Vorrichtung nach Anspruch 4 oder 5, **dadurch gekennzeichnet, dass** das Ausgabemittel (4) den Ausgabeelementen (5, 6, 7) vorgeschaltet einen Ausgabekoordinator (25) zur Steuerung von durch das Steuerungsmittel (8) an das Ausgabemittel (4) weitergeleiteten Informationen aufweist..

8. Vorrichtung nach einem der vorhergehenden Ansprüche, **dadurch gekennzeichnet, dass** die Fahrerassistenzsysteme (2, 3, 28) ein Adaptive-Fahrgeschwindigkeitsregelung-Fahrerassistenzsystem und/oder ein Spunrerlassenswarnung-Fahrerassistenzsystem und/oder ein Spurwechselhilfe-Fahrerassistenzsystem umfassen.

9. Verfahren zum Unterstützen eines Führens eines Fahrzeugs mit mindestens zwei Fahrerassistenzsystemen und mit einem Ausgabemittel, das Informationen zumindest eines der Fahrerassistenzsysteme an einen Fahrer des Fahrzeugs übermittelt, wobei ein eingangsseitig mit den Fahrerassistenzsystemen (2, 3) und ausgangsseitig mit dem Ausgabemittel (4) verbundenes, als Informationskoordinator ausgebildetes Steuerungsmittel (8) von dem Fahrer (12) zu übermittelnden Informationen der Fahrerassistenzsysteme (2, 3) steuert, **dadurch gekennzeichnet, dass** die Fahrerassistenzsyssteme (2, 3) jeweils eine Wahrscheinlichkeit bezüglich eines zu erwartenden Eintreffens eines mit der jeweiligen übermittelten Information korrespondierenden Ereignisses gegenüber dem Steuermittel (8) angeben und dass das Steuerungsmittel (8), bei Eingang einer an den Fahrer zu übermittelnden Information eines der Fahrerassistenzsysteme bei einer gleichzeitigen Angabe einer mit einer bestimmten Wahrscheinlichkeit zu erwartenden Information eines anderen der Fahrerassistenzsysteme (2, 3, 28) durch dieses andere Fahrerassistenzsystem selbst, eine von dem ersten der Fahrerassistenzsysteme (2, 3) eingehende erste Information und eine von dem zweiten der Fahrerassistenzsysteme (2, 3) eingehende zweite Information zu einer Gesamtinformation kombiniert und die Gesamtinformation an das Ausgabemittel (4) weiterleitet.

10. Verfahren nach Anspruch 9, **dadurch gekennzeichnet, dass** das Steuerungsmittel (8) in dem Steuerungsmittel (8) eingehenden Informationen der Fahrerassistenzsysteme (2, 3, 28) eine Fahrsituation aus einer Mehrzahl von zu erwartenden, in dem Speicher (32) abgelegten Fahrsituationen zuordnet und dass die zugeordnete Fahrsituation für die Informationsvereinigung berücksichtigt wird.

## Claims

1. Device for carrying out assisted driving of a vehicle having at least two driver assistance systems and having an output means for transmitting information from at least one of the driver assistance systems to a driver of the vehicle, wherein a control means (8), which is connected on the input side to the driver assistance systems (2, 3) and on the output side to the output means (4) and is embodied as an information coordinator, is provided for controlling information which is to be transmitted to the driver (12) from the driver assistance systems (2, 3), **characterized in that** the driver assistance systems (2, 3) are each configured to provide notification, to the control means (8), of a probability of an expected occurrence of an event corresponding to the respective transmitted information item, and **in that**, when an information item which is to be transmitted from one of the driver assistance systems to the driver is received when one of the other driver assistance systems (2, 3, 28) provides a simultaneous notification of an information item which is to be expected from said other driver assistance system with a certain probability, the control means (8) combines a first information item, which is received from the first of the driver assistance systems (2, 3), and a second information item, which is received from the second of the driver assistance systems (2, 3), to form a composite information item, and then passes on the composite information item to the output means (4).

2. Device according to Claim 1, **characterized in that** the control means (8) is connected on the input side to at least one driver information system (15) and/or directly to at least one vehicle sensor (17).

3. Device according to one of the preceding claims, **characterized in that** the control means (8) has a decision means (30) for providing notification of information which is to be passed on to the output means (4) from at least one of the driver assistance systems (2, 3).

4. Device according to one of the preceding claims, **characterized in that** the output means (4) has at least one optical output element (5) and at least one acoustic output element (6) and/or at least one haptic output element (7).

5. Device according to Claim 4, **characterized in that** the output means (4) has at least two output elements (5, 6, 7), the outputs of which can each be perceived with a different human sense.

6. Device according to Claim 4 or 5, **characterized in that** an output coordinator (25) for controlling information which is passed on to the output means (4) by the control means (8) is arranged between the control means (8) and the output means (4).

7. Device according to Claim 4 or 5, **characterized in that** the output means (4) has, connected upstream of the output elements (5, 6, 7), an output coordinator (25) for controlling information which is passed on to the output means (4) by the control means (8).

8. Device according to one of the preceding claims, **characterized in that** the driver assistance systems (2, 3, 28) comprise an adaptive cruise control driver assistance system and/or a lane departure warning driver assistance system and/or a lane change assistant driver assistance system.

9. Method for carrying out assisted driving of a vehicle having at least two driver assistance systems and having an output means which transmits information from at least one of the driver assistance systems to a driver of the vehicle, wherein a control means (8), which is connected on the input side to the driver assistance systems (2, 3) and on the output side to the output means (4), and is embodied as an information coordinator, controls information from the driver assistance systems (2, 3) which is to be transmitted by the driver (12), **characterized in that** the driver assistance systems (2, 3) each provide the control means (8) with a notification of a probability of an expected occurrence of an event corresponding to the respective transmitted information item, and **in that**, when an information item which is to be transmitted from one of the driver assistance systems to the driver is received when one of the other driver assistance systems (2, 3, 28) provides a simultaneous notification of an information item which is expected from said other driver assistance system with a certain probability, the control means (8) combines the first information item, which is received from the first of the driver assistance systems (2, 3), and the second information item, which is received from the second of the driver assistance systems (2, 3), to form a composite information item, and then passes on the composite information item to the output means (4).

10. Method according to Claim 9, **characterized in that** the control means (8) assigns, to information which is received in the control means (8) from the driver assistance systems (2, 3, 28), a driving situation from a plurality of driving situations which are to be expected and which are stored in the memory, and **in that** the assigned driving situation is taken into account for the combining of the information items.

## Revendications

1. Dispositif d'assistance au conducteur d'un véhicule, qui présente
au moins deux systèmes d'assistance au véhicule et un moyen de sortie qui permet de transmettre au conducteur du véhicule les informations d'au moins l'un des systèmes d'assistance au conducteur,
un moyen de commande (8) relié par son entrée aux systèmes (2, 3) d'assistance au conducteur et par sa sortie au moyen de sortie (4) et configuré comme coordinateur d'informations étant prévu pour être commandé par le conducteur (12) pour lui permettre de transmettre des informations aux systèmes (2, 3) d'assistance au conducteur,
**caractérisé en ce que**
chacun des systèmes (2, 3) d'assistance au conducteur est conçu pour indiquer sur le moyen de commande (8) une probabilité qu'un événement qui correspond à l'information particulière transmise survienne et
**en ce que** lorsque l'un des systèmes d'assistance au conducteur introduit une information à transmettre au conducteur et qu'un autre des systèmes (2, 3, 28) d'assistance au conducteur introduit une information dotée d'une probabilité définie, le moyen de commande (8) combine une première information provenant du premier des systèmes (2, 3) d'assistance au conducteur et une deuxième information provenant du deuxième des systèmes (2, 3) d'assistance au conducteur en une information globale et transmet l'information globale au moyen de sortie (4).

2. Dispositif selon la revendication 1, **caractérisé en ce que** le moyen de commande (8) est relié par son entrée à au moins un système (15) d'information du conducteur et/ou directement à au moins un détecteur (17) du véhicule.

3. Dispositif selon l'une des revendications précédentes, **caractérisé en ce que** le moyen de commande (8) présente un système (30) qui décide de l'introduction d'informations provenant au moins des systèmes (2, 3) d'assistance au conducteur et à transmettre au moyen de sortie (4).

4. Dispositif selon l'une des revendications précédentes, **caractérisé en ce que** le moyen de sortie (4) présente au moins un élément optique (5) de sortie, au moins un élément acoustique (6) de sortie et/ou au moins un élément tactile (7) de sortie.

5. Dispositif selon la revendication 4, **caractérisé en ce que** le moyen de sortie (4) présente au moins deux éléments de sortie (5, 6, 7) dont les sorties peuvent être perçues par des sens humains différents.

6. Dispositif selon les revendications 4 ou 5, **caractérisé en ce qu'**un coordinateur de sortie (25) qui commande les informations qui doivent être transmises par le moyen de commande (8) au moyen de sortie (4) est disposé entre le moyen de commande (8) et le moyen de sortie (4).

7. Dispositif selon les revendications 4 ou 5, **caractérisé en ce qu'**en amont des éléments de sortie (5, 6, 7), le moyen de sortie (4) présente un coordinateur de sortie (25) qui commande les informations qui doivent être transmises par le moyen de commande (8) au moyen de sortie (4).

8. Dispositif selon l'une des revendications précédentes, **caractérisé en ce que** les systèmes (2, 3, 28) d'assistance au conducteur comprennent un système d'assistance au conducteur par régulation adaptative de la vitesse de roulage, un système d'assistance au conducteur qui avertit de la sortie de la bande de circulation et/ou un système qui assiste le conducteur dans ses changements de bande de circulation.

9. Procédé d'assistance à un conducteur d'un véhicule à l'aide d'au moins deux systèmes d'assistance au conducteur et un moyen de sortie qui permet de transmettre au conducteur du véhicule les informations d'au moins l'un des systèmes d'assistance au conducteur,
un moyen de commande (8) relié par son entrée aux systèmes (2, 3) d'assistance au conducteur et par sa sortie au moyen de sortie (4) et configuré comme coordinateur d'informations commandant les informations à transmettre par le conducteur (12) aux systèmes (2, 3) d'assistance au conducteur,
**caractérisé en ce que**
chacun des systèmes (2, 3) d'assistance au conducteur indique sur le moyen de commande (8) une probabilité qu'un événement qui correspond à l'information particulière transmise survienne et
**en ce que** lorsque l'un des systèmes d'assistance au conducteur introduit une information à transmettre au conducteur et qu'un autre des systèmes (2, 3, 28) d'assistance au conducteur introduit une information dotée d'une probabilité définie, le moyen de commande (8) combine une première information provenant du premier des systèmes (2, 3) d'assistance au conducteur et une deuxième information provenant du deuxième des systèmes (2, 3) d'assistance au conducteur en une information globale et transmet l'information globale au moyen de sortie (4).

10. Procédé selon la revendication 9, **caractérisé en ce que** le moyen de commande (8) associe des informations provenant des systèmes (2, 3, 28) d'assistance au conducteur et entrant dans le moyen de commande à une situation de conduite sélectionnée parmi plusieurs situations de conduite probables conservées dans la mémoire (32) et **en ce que** la situation de conduite associée est prise en compte pour réunir les informations.
